Europäisches Patentamt

European Patent Office

Office européen des brevets

(19)

(11) Numéro de publication: **0 229 579**
**B1**

(12) **FASCICULE DE BREVET EUROPEEN**

(45) Date de publication du fascicule du brevet:
31.01.90

(51) Int. Cl.⁴: **B62K 19/22**

(21) Numéro de dépôt: **86420307.0**

(22) Date de dépôt: **22.12.86**

(54) **Système d'assemblage de tubes, et application de ce système à un cadre de bicyclette.**

(30) Priorité: **23.12.85 FR 8519550**

(43) Date de publication de la demande:
**22.07.87 Bulletin 87/30**

(45) Mention de la délivrance du brevet:
**31.01.90 Bulletin 90/5**

(84) Etats contractants désignés:
**AT BE CH DE ES GB GR IT LI LU NL SE**

(56) Documents cités:
**EP-A- 0 007 640**
**FR-A- 1 009 281**
**FR-A- 2 432 425**
**FR-A- 2 441 531**
**FR-A- 2 523 541**
**FR-A- 2 556 056**

(73) Titulaire: **ETABLISSEMENTS LAUZIER, 12 Route de Saint Jean, F-38309 Bourgoin Jallieu Cédex Isère(FR)**
Titulaire: **ATELIERS DE LA RIVE, La Varizelle, F-42400 Saint Chamond Loire(FR)**
Titulaire: **BADOR S.A., 34 Boulevard Jules Janin, F-42000 Saint Etienne Loire(FR)**
Titulaire: **ANGENIEUX CLB S.A., Z.I. de la Chauvetière 12 rue Edouard Martel, F-42030 Saint-Etienne(FR)**

(72) Inventeur: **Lauzier, René, Ruy, F-38300 Bourgoin Jallieu Isère(FR)**
Inventeur: **Rollin, Jean, 4 rue Nicolas Chaize, F-42000 Saint Etienne Loire(FR)**
Inventeur: **Choquelle, Jean, 15 Allée des Charmes, F-42152 l'Horme Loire(FR)**
Inventeur: **Dumas, Gérard, 69 Avenue du Belvédère, F-42170 Saint Just Saint Rambert Loire(FR)**
Inventeur: **Breat, François, 25 rue Basson, F-42000 Saint Etienne Loire(FR)**
Inventeur: **Rousson, Maurice, 28 rue des Ogiers, F-42100 Saint Etienne Loire(FR)**
Inventeur: **Defour, Paule, Villa Vertes Feuilles rue des Jardins, F-42270 Saint Priest en Jarez Loire(FR)**

(74) Mandataire: **Bratel, Gérard et al, Cabinet GERMAIN & MAUREAU Le Britannia - Tour C 20, boulevard E. Déruelle, F-69003 Lyon(FR)**

## Description

La présente invention concerne un système d'assemblage de tubes, qui s'applique notamment, mais non exclusivement, à la fabrication d'un cadre de bicyclette.

Les cadres de bicyclette sont constitués par des tubes, de section circulaire ou ovale, dont les extrémités sont réunies par l'intermédiaire d'éléments de raccordement, ou "raccords".

Traditionnellement, les extrémités des tubes des cadres de bicyclette sont engagées puis fixées, par brasage ou soudage, dans des portées creuses que comportent les raccords. Plus récemment, on a réalisé des cadres de bicyclette assemblés par collage, les extrémités des tubes étant emmanchées et collées sur des embouts appartenant aux différents raccords. Ces embouts possèdent, par exemple, une section progressivement décroissante jusqu'à leur extrémité libre – voir le brevet français N° 2 432 425 et son certificat d'addition N° 2 441 531. Les raccords pourvus de tels embouts peuvent être réalisés par un procédé de fonderie.

Toutefois, ce mode d'assemblage connu par collage nécessite un préformage "conique" spécial de l'intérieur des tubes, à leurs extrémités. De plus, pour la réalisation de l'assemblage, les tubes et raccords doivent être positionnés sur un gabarit de montage ou "mannequin", ce qui nécessite un outillage coûteux et un temps de mise en place important.

Par ailleurs, il a été récemment proposé un mode d'assemblage sans brasage, ni soudage, ni collage, par le seul montage en force des extrémités des tubes à l'intérieur d'embouts creux que comportent les raccords. Ce mode d'assemblage peut présenter des insuffisances du point de vue de la résistance mécanique et de la stabilité de l'assemblage.

On connaît également la demande de brevet européen EP-A 0 184 430 qui fait état d'un mode d'assemblage des tubes d'un cadre de bicyclette sur des embouts. Pour l'essentiel, chaque embout présente deux protées cylindriques réunies par un chanfrein. Les tubes correspondants sont collés par leur extrémité sur la première portée et serrés sur la deuxième de diamètre plus important. Un épaulement assure la butée du tube.

Cette demande de brevet européen EP-A 0 184 430 fait partie de l'état de la technique antérieure en vertu de l'article 54, paragraphe 3 de la Convention sur le brevet européen et a été publiée après la date de priorité revendiquée pour la présente invention.

La présente invention vise à éliminer les inconvénients précédents, en fournissant un système perfectionné qui évite tout préformage des extrémités des tubes, ne nécessite aucun gabarit de montage, assure une parfaite exactitude dimensionnelle même avec des tolérances relativement larges sur les tubes et raccords, possède une grande stabilité mécanique, et peut éviter certaines opérations de finition, donc un système d'assemblage permettant une fabrication en série économique et de qualité pour les cadres de bicyclettes.

A cet effet, dans le système d'assemblage de tubes objet de l'invention, utilisant des éléments de raccordement sur lesquels sont emmanchées les extrémités des tubes à réunir, chaque embout présente successivement, en partant de son extrémité libre: une première portée de section constante, sur laquelle le tube correspondant est collé; une seconde portée de section progressivement croissante, de longueur sensiblement égale à celle de la première portée, sur laquelle l'extrémité du tube est serrée par coincement; et un épaulement contre lequel la face en bout du tube vient en butée.

L'invention combine ainsi le collage du tube sur une portée de section constante, et son coincement par expansion sur une portée de section progressivement croissante, ce qui conduit à un assemblage d'une très grande rigidité. Lors de l'emmanchement à fond du tube sur l'embout, la colle peut être entraînée partiellement de la première portée vers la seconde portée, sans sortir à l'extérieur, ce qui évite toute opération de nettoyage du cadre visant à éliminer un excédent de colle. La butée de la face en bout du tube contre l'épaulement de l'embout assure automatiquement un positionnement final très précis du tube, relativement au raccord. En outre, la conformation des embouts permet un "pré-assemblage" des tubes, sans nécessité d'un gabarit de montage.

Dans le cas particulier d'un tube de section circulaire, l'embout correspondant d'un élément de raccordement présente successivement, en partant de son extrémité libre: une première portée de forme cylindrique, une seconde portée de forme tronconique, et un épaulement de forme annulaire.

De préférence, la section constante de la première portée est prévu légèrement inférieure à la section inférieure du tube correspondant, de manière à ménager un jeu radial, par exemple de l'orde de 1 à 4 dixièmes de millimètre, pour la colle liant le tube à cette première portée.

La section maximale de la seconde portée, c'est-à-dire sa section au voisinage de l'épaulement, est au contraire prévue légèrement supérieure à la section intérieure du tube, de manière à provoquer un certain effet d'expansion du tube, assurant son serrage sur l'embout. L'expansion radiale du tube peut être d'environ un demi-millimètre.

Le système d'assemblage de tubes défini ci-dessus est applicable à un cadre de bicyclette, avec tubes de section circulaire ou ovale, en métal ou autre matériau permettant une déformation plastique. Ce système est alors utilisable pour la réunion d'une partie ou de la totalité des éléments tubulaires du cadre, à savoir les tubes proprements dits et les autres constituants tels que les haubans de la fourche arrière, aux éléments de raccordement habituels: boîtier de direction, boîtier de pédalier, raccord de selle et pattes arrière du cadre ; tous ces éléments de raccordement sont pourvus d'embouts orientés suivant les directions des éléments tubulaires correspondants, chaque embout présentant une première portée de section constante, prolongée par une seconde portée de section progressivement croissante, selon le principe défini plus haut.

Dans le cas d'un cadre de conformation particulière, facilement réalisable avec le système d'assemblage objet de l'invention, le même principe est appliqué aussi à un raccord en "Y", réunissant les sommets des deux haubans de la fourche arrière à un tube supplémentaire, lui-même relié au raccord de selle.

De toute façon, l'invention sera mieux comprise à l'aide de la description qui suit, en référence au dessin schématique annexé représentant, à titre d'exemple non limitatif, une forme de réalisation d'un cadre de bicyclette, comportant application du système d'assemblage de tubes défini plus haut :

Figure 1 est une vue d'ensemble, en perspective, d'un cadre de bicyclette dont les tubes sont assemblés entre eux par le système objet de l'invention ;

Figure 2 est un schéma de principe de ce système d'assemblage, montrant en coupe longitudinale une extrémité de tube et un embout destiné à recevoir l'extrémité du tube, avant la réunion de ces deux éléments ;

Figure 3 est une vue en coupe longitudinale similaire à figure 2, mais montrant l'extrémité du tube après sa réunion avec l'embout ;

Figure 4 est une vue de détail, en coupe longitudinale, du boîtier de direction appartenant au cadre de bicyclette selon la figure 1, avec indication sommaire des tubes raccordés à ce boîtier ;

Figure 5 est une vue de détail, en coupe suivant V-V de figure 6, du boîtier de pédalier appartenant au cadre de bicyclette selon la figure 1, également avec indication sommaire des tubes raccordés à ce boîtier ;

Figure 6 est une autre vue en coupe du boîtier de pédalier, suivant VI-VI de figure 5 ;

Figure 7 est une vue de côté du raccord de selle appartenant au cadre de bicyclette selon la figure 1, avec indication sommaire des tubes assemblés à ce raccord ou le traversant ;

Figure 8 est une vue de face du raccord intermédiaire en "Y" de la fourche arrière du cadre de bicyclette selon la figure 1, avec indication sommaire du tube et des deux haubans réunis par ce raccord ;

Figures 9 à 14 sont des vues très schématiques, illustrant les phases successives d'assemblage des tubes du cadre de bicyclette considéré.

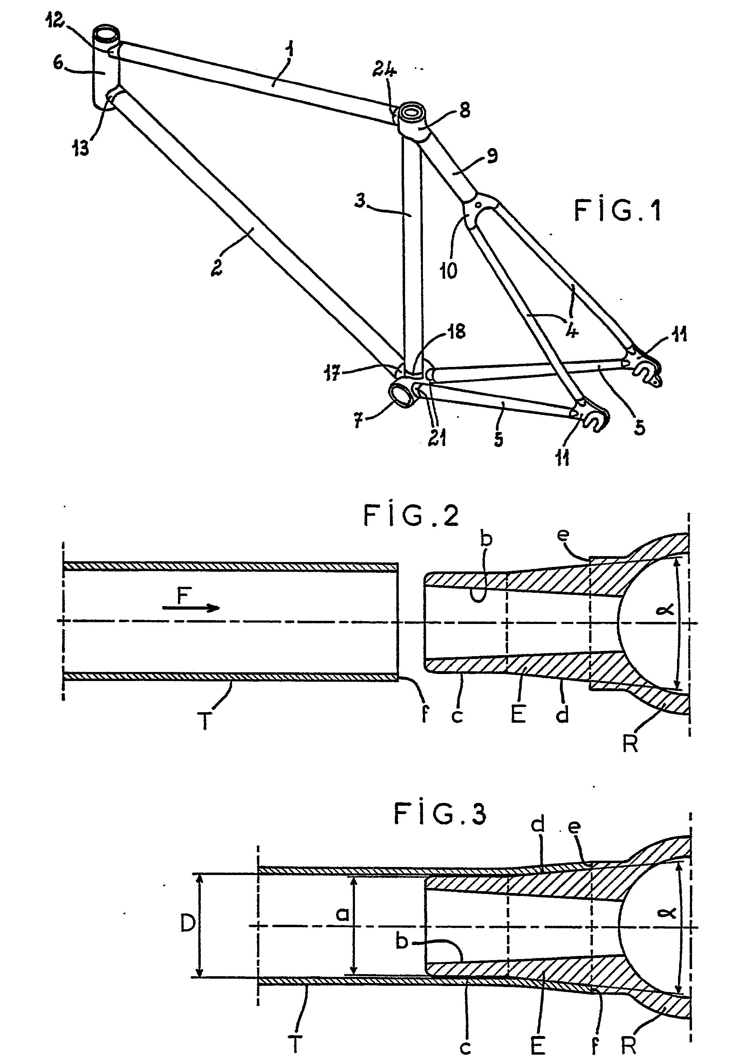

La figure 1 représente un cadre de bicyclette qui, comme cela est connu en soi, est constitué par les éléments tubulaires suivants : un tube supérieur 1, un tube diagonal 2, un tube de selle 3, deux haubans 4 appartenant à la fourche arrière, et deux bases 5. Le tube supérieur 1 est réuni au tube diagonal 2, à l'avant du cadre, par l'intermédiaire d'un boîtier de direction 6. Le tube diagonal 2 est réuni au tube de selle 3, ainsi qu'aux deux bases 5, par l'intermédiaire d'un boîtier de pédalier 7. Le tube supérieur 1 est réuni au tube de selle 3 et à la fourche arrrière au moyen d'un raccord de selle 8.

Dans l'exemple particulier ici considéré, le raccord de selle 8 est relié, par un tube suppémentaire 9, à un raccord intermédiaire 10 en "Y", auquel sont réunis les sommets des deux haubans 4. D'une façon classique, les haubans 4 sont raccordés aux bases 5 correspondantes par l'intermédiaire de deux pattes arrière 11.

L'invention concerne les assemblages des divers tubes de ce cadre aux boîtiers 6 et 7, aux raccords 8 et 10 et aux pattes 11, et par conséquent les uns avec les autres. Le principe commun à tous ces assemblages est illustré sur les figures 2 et 3.

Sur ces figures, T désigne une extrémité de tube, à réunir avec un raccord R ou autre élément analogue, tel que patte ou boîtier. Le raccord R est pourvu, dans la direction de chaque tube T à raccorder, d'un embout E. En partant de l'extrémité libre de l'embout E, on distingue successivement : une première portée $c$ de section constante ; une seconde portée $d$ de section progressivement croissante, prolongeant la première portée $c$ en direction du corps central du raccord R ; et un épaulement $e$, limitant la seconde portée $d$ en assurant la transition avec le corps central du raccord R.

Dans le cas particulier du raccordement d'un tube T de section circulaire, la première portée $c$ possède une forme cylindrique, et la seconde portée $d$ possède une forme tronconique avec un certain angle d'ouverture $\alpha$ (fortement exagéré sur le dessin) ; l'épaulement $e$ présente, quant à lui, une forme annulaire. Le diamètre extérieur $a$ de la portée cylindrique $c$ est légèrement inférieur au diamètre intérieur D du tube T. Le diamètre maximal de la portée tronconique $d$ est, au contraire, légèrement supérieur au diamètre intérieur D du tube T. Les deux portées $c$ et $d$ peuvent posséder des longueurs sensiblement égales.

Avantageusement, l'embout E est creux et présente par conséquent une cavité interne $b$. Celle-ci peut notamment déboucher à l'extrémité libre de l'embout E, et présenter une certaine conicité inverse de celle de la portée $d$, pour des raisons de facilité de démoulage dans le cas d'un raccord R réalisé par un procédé de fonderie.

Pour procéder à la réunion du tube T et du raccord R, la première portée $c$ de l'embout E est enduite de colle, et l'extrémité du tube T est emmanchée en force sur l'embout, comme indiqué par une flèche F, jusqu'à venir en butée contre l'épaulement $e$. On obtient ainsi une liaison par collage entre le tube T et le raccord R dans la région de la portée cylindrique $c$ de l'embout E, liaison renforcée par un serrage avec coincement de l'extrémité du tube T sur la portée conique $d$ de l'embout E ; un positionnement final précis est assuré par la venue en butée de la face en bout $f$ du tube T contre l'épaulement $e$.

Les figures suivantes 4 à 8 illustrent l'application de ce principe aux divers assemblages de tubes, nécessaires à l'obtention d'un cadre de bicyclette complet selon la figure 1.

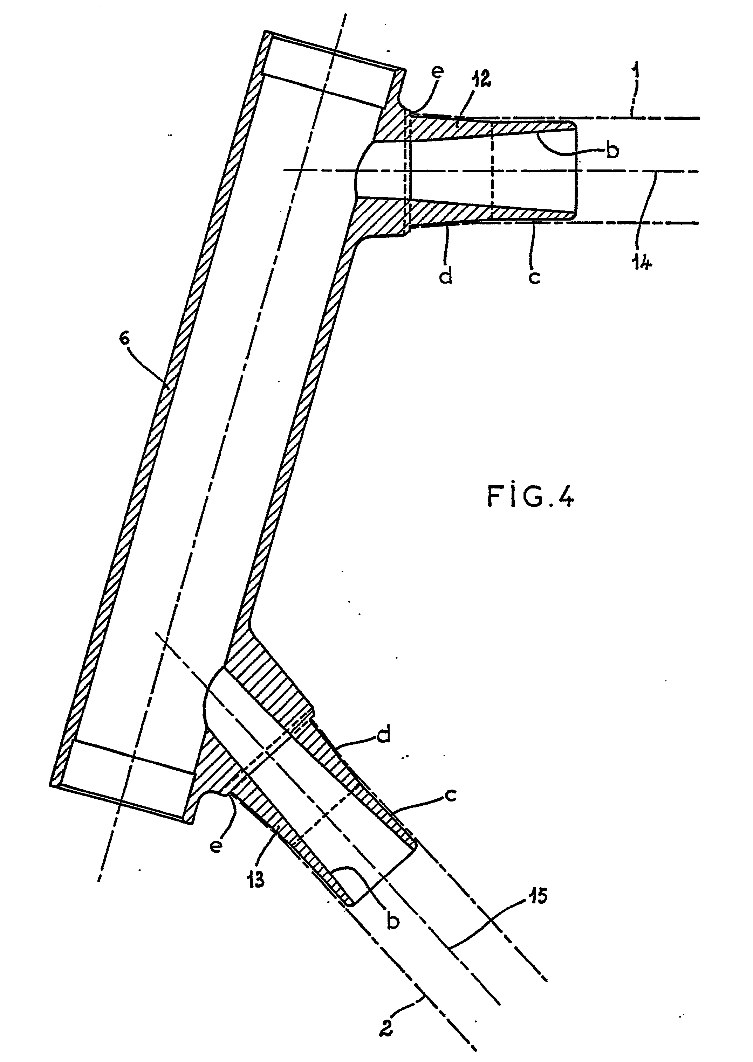

La figure 4 montre ainsi, en premier lieu, l'assemblage du tube supérieur 1 et du tube diagonal 2 par l'intermédiaire du boîtier de direction 6, à l'avant du cadre. Le boîtier de direction 6, essentiellement tubulaire, comporte dans un même plan un premier embout 12 et un second embout 13, dont les axes respectifs 14 et 15 suivent des directions convergentes. Chaque embout 12 ou 13 présente successivement, suivant le principe général décrit plus haut : une portée cylindrique $c$, une portée tronconique $d$, et un épaulement annulaire $e$. Le tube supérieur 1 est emmanché sur le premier embout 12 et le tube diagonal 2 est emmanché sur le second embout 13, chaque tube 1 ou 2 étant collé sur la portée cylindrique c de l'embout correpndant 12 ou 13, et serré contre la portée tronconique d. Il peut être encore noté que les cavités b des deux embouts 12 et 13 comuniquent avec l'intérieur du boîtier de direction 6.

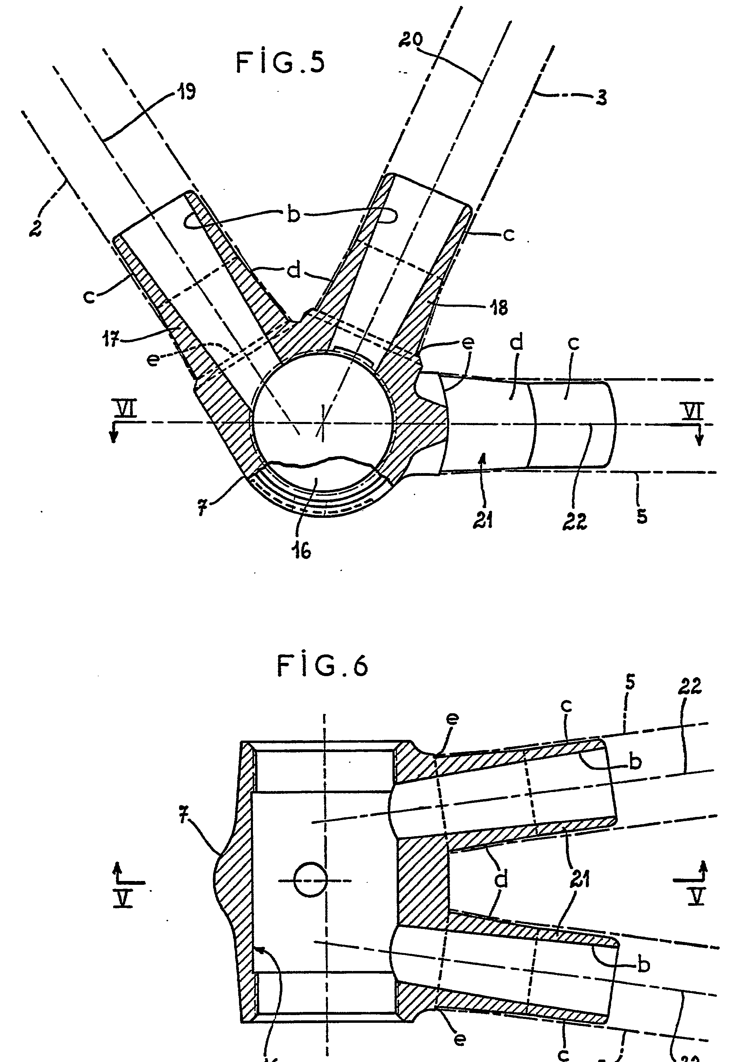

Les figures 5 et 6 illustrent l'assemblage du tube diagonal 2, du tube de selle 3 et des deux bases 5, qui convergent dans la région du boîtier de pédalier 7.

Ce boîtier de pédalier 7, comportant un logement cylindrique 16 d'axe horizontal, est pourvu de deux premiers embouts 17 et 18, dont les axes respectifs 19 et 20 sont situés dans le plan de symétrie du boîtier 7, ces axes 19 et 20 suivant des directions convergentes. Deux autres embouts 21 sont formés symétriquement, leurs axes respectifs 22 forment un angle aigu avec le plan de symétrie du boîtier de pédalier 7. Tous ces embouts 17,18 et 21 sont réalisés selon le principe général décrit plus haut. Les deux premiers embouts 17 et 18 servent respectivement au raccordement du tube diagonal 2 et du tube de selle 3. Les deux autres embouts 21 permettent l'assemblage des deux bases 5. Le mode de liaison avec collage et emmanchement en force, entre chaque tube et l'embout correspondant, est toujours le même. Les cavités b des divers embouts 17,18 et 21 comuniquent toutes avec le logement 16.

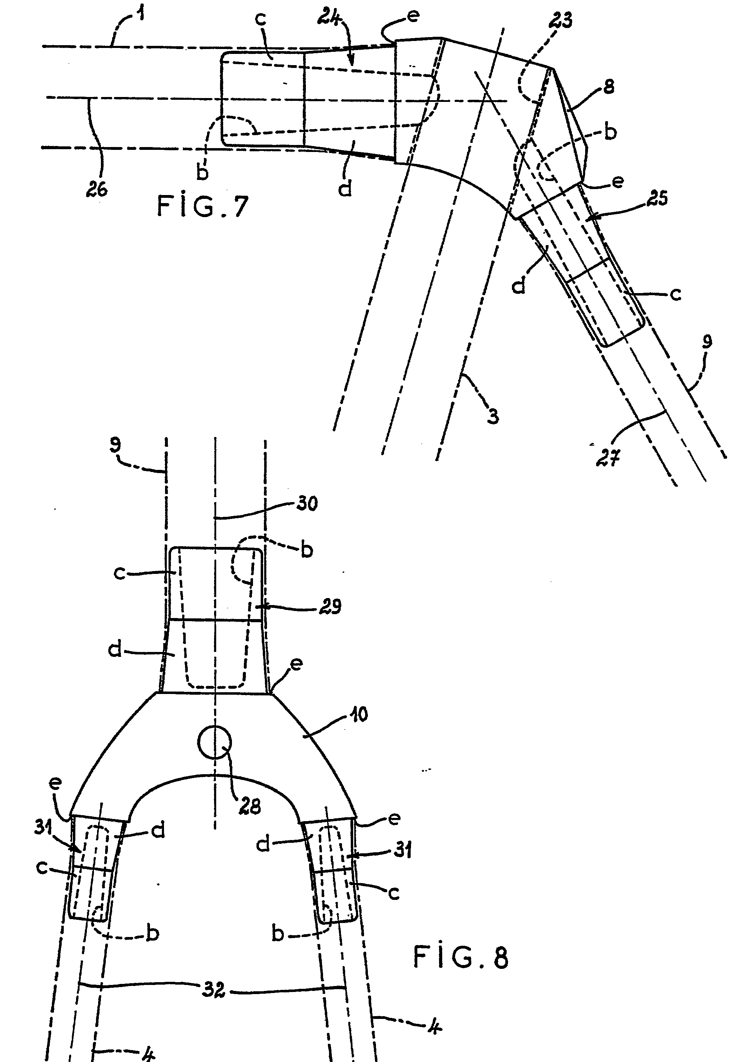

La figure 7 montre le raccord de selle 8, qui possède un logement cylindrique 23 recevant l'extrémité supérieure du tube de selle 3. Ce raccord de selle 8 comporte dans un même plan un premier embout 24 et un second embout 25, dont les axes respectifs 26 et 27 sont situés dans un même plan et suivent des directions convergentes. Le tube supérieur 1 est emmanché et collé sur le premier embout 24, selon le principe exposé plus haut. Le second embout 25 sert ici au raccordement de l'extrémité supérieure du tube 9. Ce dernier tube ayant une section de forme aplatie, par exemple ovale, les deux portées c et d de l'embout 25 doivent posséder des sections de forme correspondante, ces sections étant constante pour la portée c et croissante pour la portée d.

La figure 8 montre plus en détail le raccord intermédiaire 10 en "Y", permettant de réunir l'extrémité inférieure du tube 9 aux sommets des deux haubans 4, pour réaiser la fourche arrière.

Le raccord 10 en "Y" présente un alésage 28 pour la fixation du frein arrière. Il comporte un premier embout 29 dont l'axe 30 est situé dans le plan de symétrie de ce raccord 10, et dont les deux portées c et d ont des sections adaptées à celle du tube 9, lequel est emmanché et collé sur ce premier embout 29. Le raccord 10 est encore pourvu de deux autres embouts 31, disposés symétriquement, dont les axes respectifs 32 forment un angle aigu avec le plan de symétrie du raccord 10. Ces deux derniers embouts 31 reçoivent les extrémités supérieures des deux haubans 4.

Le raccord 10 en "Y" étant une pièce massive, les cavités b des embouts 29 et 31 se présentent ici comme des trous borgnes.

Enfin, la réunion de l'extrémité inférieure de chaque hauban 4 à la base 5 correspondante, par l'intermédiaire de l'une des deux pattes arrière 11, est réalisée toujours selon le même principe, de sorte qu'il n'est pas jugé nécessaire de l'expliquer ici en détail. Chaque patte 11 est pourvue de deux embouts, conformés comme décrit précédemment, et orientés suivant les directions respectives du hauban 4 et de la base 5.

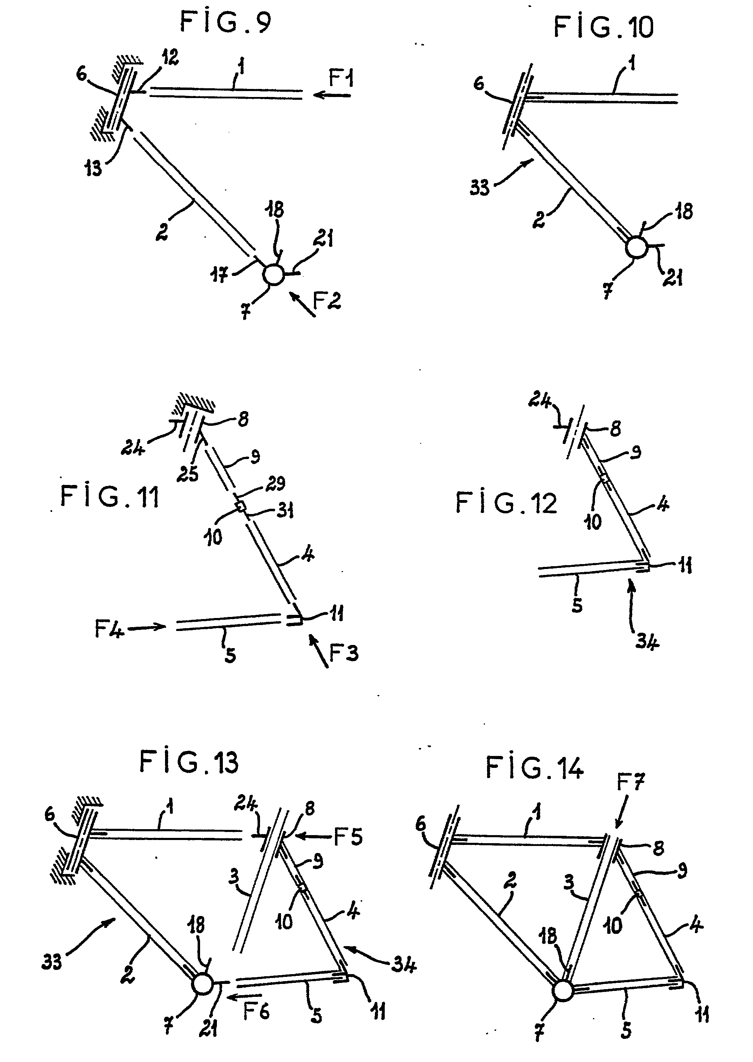

Les différents raccordements de tubes et autres éléments, intervenant dans la réalisation d'un cadre de bicyclette complet, ont été décrits jusqu'ici sans tenir compte de l'ordre réel dans lequel s'effectuent les opérations d'assemblage. Les figures 9 à 14 indiquent un mode préférentiel de montage du cadre, consistant d'abord à réaliser deux sous-ensembles, puis à les réunir pour obtenir le cadre complet.

A un premier poste de travail, on réalise un sous-ensemble "avant" composé : du tube supérieur 1, du tube diagonal 2, du boîtier de direction 6 et du boîtier de pédalier 7. Comme le montre la figure 9, le boîtier de direction 6 est maintenu fixe. Une première action de poussée, suivant une flèche F1, assure l'emmanchement du tube supérieur 1 sur l'embout 12 du boîtier de direction 6. Une deuxième action de poussée, suivant une flèche F2, assure l'emmanchement du tube diagonal 2 simultanément sur l'embout 13 du boîtier de direction 6 et sur l'embout 17 du boîtier de pédalier 7. Après assemblage de ces parties, on obtient le premier sous-ensemble 33, représenté à la figure 10.

A un autre poste de travail, on réalise un sous ensemble "arrière" composé : des haubans 4, des bases 5, du raccord de selle 8, du tube 9, du raccord 10 en "Y" et des pattes arrière 11. C'est ici le raccord de selle 8 qui est maintenu fixe, comme indiqué sur la figure 11. Une première action de poussée, suivant une flèche F3, assure l'assemblage de la fourche arrière, c'est-à-dire : d'une part, la réunion du tube 9 avec le raccord de selle 8 et le raccord 10 en "Y", par emmanchement sur les embouts respectifs 25 et 29 ; d'autre part, la réunion des deux haubans 4 avec le raccord 10 en "Y" et avec les pattes arrière 11, par emmanchement sur les embouts 31 ainsi que sur les embouts correspondants (non repérés) des pattes 11. Une deuxième action de poussée, suivant une flèche F4, réunit les deux bases 5 aux pattes arrière 11 correspondantes. Après assemblage de toutes ces parties, on obtient le second sous-ensemble 34, représenté à la figure 12.

Les deux sous-ensembles 33 et 34 ainsi constitués sont réunis entre eux à un troisième poste de travail. Le tube de selle 3 étant introduit dans le raccord de selle 8, sans être poussé à fond, les deux sous-ensembles 33 et 34 sont présentés l'un par rapport à l'autre dans la position relative indiquée sur la figure 13. Le sous-ensemble "avant" 33 étant maintenu fixe, des actions de poussée exercées dans des directions sensiblement parallèles suivant des flèches F5 et F6, assurent : d'une part, l'introduction de l'embout 24 du raccord de selle 8 dans le tube supérieur 1, et d'autre part, l'emmanchement des deux bases 5 sur les embouts correspondants 21 du boîtier de pédalier 7. Enfin, comme le montre la figure 14, le tube de selle 3 est enfoncé plus profondément au travers du raccord de selle 8, par un action de poussée suivant une flèche F7, de manière à venir s'emmancher sur l'embout 18 du boîtier de pédalier 7. La partie supérieure du tube de selle 3 peut être verrouillée dans le raccord de selle 8 par collage, vissage ou sertissage. On obtient ainsi un cadre de bicyclette complet, assemblé rigidement et de dimensions bien précises.

Ce système d'assemblage de tubes a été décrit ci-dessus, dans son application à la fabrication d'un cadre de bicyclette, mais il va de soi qu'il peut être appliqué aussi à l'assemblage d'éléments tubulaires dans d'autres domaines. Comme il ressort aussi de ce qui précède, l'invention n'est nullement limitée à l'assemblage de tubes de section circulaire, et elle convient aussi pour des tubes de section ovale, elliptique ou autre.

## Revendications

1. Système d'assemblage de tubes, notamment pour cadre de bicyclette, utilisant des éléments de raccordement (R) pourvus d'embouts (E) sur lesquels sont emmanchées les extrémités de tubes (T) à réunit, chaque embout (E) présentant successivement, en partant de son extrémité libre: une première portée (c) de section constante, sur laquelle le tube (T) correspondant est collé; une seconde portée (d) de section progressivement croissante, de longueur sensiblement égale à celle de la première portée (c), sur laquelle l'extrémité du tube (T) est serrée par coincement (c); et un épaulement (e) contre lequel la face en bout (f) du tube (T) vient en butée.

2. Système d'assemblage de tubes selon la revendication 1, caractérisé en ce que, pour un tube (T) de section circulaire, l'embout correspondant (E) d'un élément de raccordement (R) présente successivement, en partant de son extrémité libre: une première portée (c) de forme cylindrique, une seconde portée (d) de forme tronconique, et un épaulement (e) de forme annulaire.

3. Système d'assemblage de tubes selon la revendication 1 ou 2, caractérisé en ce que la section constante de la première portée (c) est légèrement inférieure à la section intérieure du tube (T) correspondant, de manière à ménager un jeu radial pour la colle liant le tube (T) à cette première portée (c).

4. Système d'assemblage de tubes selon l'ensemble des revendications 2 et 3, caractérisé en ce que la première portée (c) possède un diamètre extérieur (a) légèrement inférieur au diamètre intérieur (D) du tube (T) correspondant.

5. Système d'assemblage de tubes selon l'une quelconque des revendications 1 à 4, caractérisé en ce que la section maximale de la seconde portée (d), c'est-à-dire sa section au voisinage de l'épaulement (e), est légèrement supérieure à la section intérieure du tube (T).

6. Système d'assemblage de tubes selon l'une quelconque des revendications 1 à 5, caractérisé par son application à un cadre de bicyclette, pour la réunion d'au moins une partie des éléments tubulaires (1 à 5, 9), du cadre au boîtier de direction (6), au boîtier de pédalier (7), au raccord de selle (8) et aux pattes arrière (11) du cadre, tous ces éléments de raccordement (6, 7, 8, 11) étant pourvus d'embouts (12, 13, 17, 18, 21, 24, 25) orientés suivant les directions des éléments tubulaires correspondants, chaque embout présentant une première portée (c) de section constante, prolongée par une seconde portée (d) de section progressivement croissante.

7, Système d'assemblage de tubes selon la revendication 6, caractérisé en ce qu'il est appliqué aussi à un raccord en "Y" (10), réunissant les sommets des deux haubans (4) de la fourche arrière du cadre de bicyclette à un tube supplémentaire (9), lui-même relié au raccord de selle (8).

8. Système d'assemblage de tubes selon la revendication 7, caractérisé en ce que le raccord de selle (8) comporte un premier embout (24) sur lequel est emmanché et collé le tube supérieur (1) du cadre, un second embout (25) pour le raccordement du tube supplémentaire (9) précité, et un logement cylindrique (23) recevant l'extrémité supérieure du tube de selle (3).

## Patentansprüche

1. Verfahren zum Zusammensetzen von Röhren, insbesondere für Fahrradrahmen, unter Verwendung von mit Ansätzen (E) versehenen Verbindungselementen (R), auf denen die zu verbindenden Röhrenenden (T) aufgesteckt sind, wobei jeder Ansatz (E), von seinem freien Ende ausgehend, der Reihe nach aufweist: einen ersten Bereich (c) mit konstantem Querschnitt, auf dem das entsprechende Rohr aufgeklebt ist; einen zweiten Bereich (d) mit progressiv größerwerdendem Querschnitt, dessen Länge etwa gleich ist mit der des ersten Bereiches (c), auf dem das Röhrenende (T) durch Verkeilung festgehalten wird, und einen Vorsprung (e), gegen den die Stirnseite (f) des Rohres (T) anstößt.

2. Verfahren zum Zusammensetzen von Röhren nach Anspruch 1, dadurch gekennzeichnet, daß für ein Rohr (T) mit kreisförmigem Querschnitt der entsprechende Ansatz (E) eines Verbindungselementes (R) von seinem freien Ende ausgehend der Reihe nach aufweist: einen zylinderförmigen ersten Bereich (c), einen kegelstumpfförmigen zweiten Bereich (d), und einen ringförmigen Vorsprung (e).

3. Verfahren zum Zusammensetzen von Röhren nach Anspruch 1 oder 2, dadurch gekennzeichnet, daß der konstante Querschnitt des ersten Bereiches (c) ein wenig kleiner ist als der innere Querschnitt des entsprechenden Rohres (T), so daß ein radialer Spielraum für den Kleber vorhanden ist, der das Rohr (T) auf diesen ersten Bereich (c) bindet.

4. Verfahren zum Zusammensetzen von Röhren nach den Ansprüchen 2 und 3, dadurch gekennzeichnet, daß der erste Bereich (c) einen äußeren Durchmesser (a) besitzt, der ein wenig kleiner ist als der innere Durchmesser (D) des entsprechenden Rohres (T).

5. Verfahren zum Zusammensetzen von Röhren nach einem der Ansprüche 1 bis 4, dadurch gekennzeichnet, daß der maximale Querschnitt des zweiten Bereiches (d), d.h. der dem Vorsprung (e) benachbarte Querschnitt, ein weniger größer ist als der innere Querschnitt des Rohres (T).

6. Verfahren zum Zusammensetzen von Röhren nach einem der Ansprüche 1 bis 5, gekennzeichnet durch seine Anwendung bei einem Fahrradrahmen zur Vereinigung von mindestens einem Teil der röhrenförmigen Elemente (1 bis 5, 9) des Rahmens am Lenkgehäuse (6), am Tretkurbelgehäuse (7), an der Sattelhalterung (8) und an den hinteren Stützen (11) des Rahmens, wobei alle diese Verbindungselemente (6, 7, 8, 11) mit Ansätzen (12, 13, 17, 18, 21, 24, 25) versehen sind, die in die Richtungen der entsprechenden rohrförmigen Elemente ausgerichtet sind, und wobei jeder Ansatz einen ersten Bereich (c) mit konstantem Querschnitt aufweist, der durch einen zweiten Bereich (d) mit progressiv größerwerdendem Querschnitt verlängert ist.

7. Verfahren zum Zusammensetzen von Röhren nach Anspruch 6, dadurch gekennzeichnet, daß man auch ein "Y"-Verbindungsstück (10) anbringt, das die oberen Enden der Streben (4) der hinteren Gabel des Fahrradrahmens mit einem zusätzlichen Rohr (9) verbindet, das selbst mit der Sattelhalterung (8) verbunden ist.

8. Verfahren zum Zusammensetzen von Röhren nach Anspruch 7, dadurch gekennzeichnet, daß die Sattelhalterung (8) einen ersten Ansatz (24) aufweist, auf den das obere Rohr (1) des Rahmens eingesetzt und festgeklemmt ist, einen zweiten Ansatz (25) für die Verbindung des vorstehend genannten zusätzlichen Rohres (9), und eine zylindrische Lagerung (23) zur Aufnahme des oberen Endes des Sattelrohres (3).

**Claims**

1. Tube assembly system, in particular for a bicycle frame, using connecting elements (R) provided with joining pieces (E) onto which are fitted the ends of the tubes (T) to be joined, each joining piece (E) having in succession, starting from its free end: a first bearing surface (c) of constant cross-section, on which the corresponding tube (T) is glued; a second bearing surface (d) of progressively increasing cross-section, of length substantially equal to that of the first bearing surface (c), onto which the end of the tube (T) is squeezed by being wedged on (c); and a shoulder (e) against which the end face (f) of the tube (T) comes to abut.

2. Tube assembly system according to Claim 1, characterized in that, for a tube (T) of circular cross-section, the corresponding joining piece (E) of a connecting element (R) has in succession, starting from its free end: a first bearing surface (c) of cylindrical shape, a second bearing surface (d) of frustoconical shape, and a shoulder (e) of annular shape.

3. Tube assembly system according to Claim 1 or 2, characterized in that the constant cross-section of the first bearing surface (c) is slightly smaller than the internal cross-section of the corresponding tube (T) such that a radial play is left for the glue binding the tube (T) to this first bearing surface (c).

4. Tube assembly system according to Claims 2 and 3 together, characterized in that the first bearing surface (c) has an external diameter (a) slightly smaller than the internal diameter (D) of the corresponding tube (T).

5. Tube assembly system according to any one of Claims 1 to 4, characterized in that the maximum cross-section of the second bearing surface (d), that is to say its cross-section in the vicinity of the shoulder (e), is slightly larger than the internal cross-section of the tube (T).

6. Tube assembly system according to any one of Claims 1 to 5, characterized in that it is applied to a bicycle frame in order to join at least some of the tubular elements (1 to 5, 9) of the frame to the steering casing (6), to the pedals assembly casing (7), to the saddle connector (8) and to the rear clips (11) of the frame, all these connecting elements (6, 7, 8, 11) being provided with joining pieces (12, 13, 17, 18, 21, 24, 25) oriented in the directions of the corresponding tubular elements, each joining piece having a first bearing surface (c) of constant cross-section, lengthened by a second bearing surface (d) of progressively increasing cross-section.

7. Tube assembly system according to Claim 6, characterized in that it is also applied to a Y-shaped connector (10), joining the tops of the two bracing elements (4) of the rear fork of the bicycle frame to a supplementary tube (9) which is itself joined to the saddle connector (8).

8. Tube assembly system according to Claim 7, characterized in that the saddle connector (8) has a first joining piece (24) onto which there is fitted and glued the cross bar (1) of the frame, a second joining piece (25) for connecting the above-mentioned supplementary tube (9), and a cylindrical receiver (23) receiving the upper end of the saddle tube (3).

EP 0 229 579 B1

FİG.1

FİG.2

FİG.3

EP 0 229 579 B1

FIG.4

FIG.5

FIG.6

FIG.7

FIG.8

FÌG.9

FÌG.10

FÌG.11

FÌG.12

FÌG.13

FÌG.14